# FASCICULE DE BREVET EUROPEEN

(11) **EP 3 793 812 B1**
(45) Date de publication et mention de la délivrance du brevet: **12.07.2023**
(21) Numéro de dépôt: 19790033.5
(22) Date de dépôt: 16.05.2019
(51) Int. Cl.: B29D 30/00

(54) **PROCEDE DE FABRICATION D'UN PNEUMATIQUE EQUIPE D'UN MODULE DE COMMUNICATION RADIOFREQUENCE**
VERFAHREN ZUR HERSTELLUNG EINES REIFENS MIT EINEM RADIOFREQUENZKOMMUNIKATIONSMODUL
METHOD FOR PRODUCING A TIRE PROVIDED WTH A RADIOFREQUENCY COMMUNICATIONS MODULE

(30) Priorité: 17.05.2018 FR 1854102
(43) Date de publication de la demande: 24.03.2021
(73) Titulaire: COMPAGNIE GENERALE DES ETABLISSEMENTS MICHELIN, 63000 Clermont-Ferrand (FR)
(72) Inventeur: BESTGEN, Luc, 63040 CLERMONT-FERRAND Cedex 9 (FR); HINC, Henri, 63040 CLERMONT-FERRAND Cedex 9 (FR); GLIBERT, Severine, 63040 CLERMONT-FERRAND Cedex 9 (FR)
(74) Mandataire: Roussy, Delphine
(86) Numéro de dépôt international: PCT/FR2019/051120
(87) Numéro de publication internationale: WO 2019/220063

(56) Documents cités:
- EP-A1- 1 977 912
- EP-A1- 2 361 790
- EP-A1- 2 777 958
- EP-A1- 3 196 056
- WO-A1-2012/030321
- WO-A1-2016/193457
- WO-A1-2018/077501
- US-A1- 2017 341 323

## Description

### Domaine de l'invention

La présente invention est relative aux pneumatiques, et plus particulièrement à un pneumatique équipé d'un module de communication radiofréquence.

### État de la technique

On connaît déjà dans l'état de la technique, notamment d'après EP 1 977 912 B1, un pneumatique de type poids-lourd équipé d'un module de communication radiofréquence. Dans ce document, le module de communication radiofréquence comprend un transpondeur à identification par radiofréquence passif muni d'une antenne rayonnante hélicoïdale formant dipôle. Ce type de transpondeur est généralement désigné par le sigle anglais RFID. Un tel transpondeur peut stocker des données, par exemple relatives à l'identification, au type et/ou à la date de fabrication du pneumatique.

Le document WO 2016/193457 A1 présente un module de communication comportant un transpondeur radiofréquence passif comprenant une antenne primaire connectée électriquement à une puce électronique et couplée inductivement à une antenne rayonnante dipôle constituée d'un ressort hélicoïdal monobrin et l'antenne primaire étant disposée à l'intérieur du ressort hélicoïdal monobrin de l'antenne rayonnante. Ce module de communication ne comporte pas de liaison mécanique entre l'antenne rayonnante et la puce électronique ce qui améliore sensiblement sa résistance en service dans des conditions sévères telles que celles subies à l'intérieur d'une structure de pneumatique. Les demandes WO 2018077501 A et US 2017/0341323 A1 décrivent d'autres exemples de l'incorporation d'un module de communication au sein de l'ébauche du pneumatique plein au cours du cycle de fabrication du pneumatique.

### Description brève de l'invention

L'invention a pour objet un procédé de fabrication d'un pneumatique équipé d'un module de communication, consistant à successivement et dans l'ordre requis par l'architecture du pneumatique poser des produits caoutchouteux notamment des profilés et des éléments de renforcement sur un support donné pour donner une ébauche de pneumatique, puis à vulcaniser l'ébauche de pneumatique pour donner un pneumatique, le module de communication comportant un transpondeur radiofréquence comprenant une antenne primaire connectée électriquement à une puce électronique et couplée inductivement à une antenne rayonnante dipôle constituée d'un ressort hélicoïdal monobrin et l'antenne primaire étant disposée à l'intérieur du ressort hélicoïdal monobrin de l'antenne rayonnante. Ce procédé est caractérisé en ce que, avant de poser l'un des profilés caoutchouteux sur l'ébauche de pneumatique, on crée une fente à partir d'une surface du profilé caoutchouteux et on introduit le module de communication à l'intérieur de la fente.

La fente à la surface du profilé caoutchouteux peut être réalisée indépendamment des opérations d'assemblage de l'ébauche de pneumatique.

Dans ce mode de réalisation, la fente est réalisée dans le profilé choisi à la fin de la préparation dudit profilé et avant ou pendant son transfert vers le dispositif d'assemblage de l'ébauche de pneumatique. Lorsque le profilé arrive pour être déposé sur l'ébauche de pneumatique, il comporte déjà une fente pour la mise en place d'un module de communication et il peut aussi déjà comporter le module de communication dans la fente.

On entend ici par « fente », une ouverture située à la surface du profilé qui est à la fois étroite et allongée au niveau de la surface du profilé et qui soit profonde suivant l'épaisseur du profilé.

Cette fente par sa forme allongée permet une insertion aisée et guidée du module de communication suivant une dimension principale du module de communication ce qui favorise l'orientation du module de communication au sein du profilé. Par sa profondeur au niveau de l'épaisseur du profilé, elle permet l'insertion complète du module de communication à l'intérieur du profilé. Cela assure un enrobage du module de communication par le matériau constituant le profilé qui lui confère une isolation mécanique et éventuellement électrique. De plus, l'association de l'ouverture allongée en surface et profonde suivant l'épaisseur assure aussi une orientation contrôlée du module de communication au sein du profilé. Enfin par son étroitesse, la fente permet de retenir le module de communication qui a été initialement inséré mécaniquement en totalité dans la fente. Ainsi, on assure un positionnement maîtrisé du module de communication au sein du profilé tout au long du cycle de fabrication du pneumatique.

Et, l'étape d'insertion du module de communication au sein du profilé peut aussi avoir lieu en dehors du flux de fabrication du pneumatique ce qui permet de gagner du temps de cycle pour la fabrication du pneumatique équipé d'un tel module de communication. De plus, ce profilé peut aussi être le résultat d'un complexeage et/ou d'une coextrusion de plusieurs profilés et/ou éléments de renforcement en amont ce qui améliore aussi la productivité de fabrication d'un tel pneumatique. En effet on élimine alors les opérations de pose des divers profilés individuellement comme l'aurait nécessité l'introduction du module de communication à l'interface entre deux profilés.

Enfin, l'insertion totale du module de communication au sein du profilé améliore l'endurance mécanique du pneumatique puisque le module de communication qui constitue une singularité mécanique au sein du pneumatique n'est plus à l'interface des profilés et/ou éléments de renforcement. De ce fait, on éloigne le module de communication de toutes les extrémités radiales des profilés ou des éléments de renforcement qui constituent aussi potentiellement des singularités de rigidité au sein du pneumatique. L'éloignement de ces singularités les unes des autres est favorable à l'endurance du pneumatique.

La fente peut aussi être réalisée pendant l'assemblage de l'ébauche de pneumatique.

Dans ce cas, on réalise la fente et on insère le module de communication juste avant de déposer le profilé sur l'ébauche de pneumatique.

Dans les deux cas, cette fente peut être réalisée aisément et rapidement à l'aide d'un dispositif de coupe à ultra-sons, par exemple.

Ce procédé permet de positionner de façon simple et précise le module de communication à l'endroit choisi de la structure du pneumatique.

Selon un premier mode de réalisation, le module de communication peut être constitué du transpondeur radiofréquence. Dans ce cas, le transpondeur radiofréquence est placé à l'intérieur de la fente du profilé caoutchouteux sans être enrobé par un mélange caoutchouteux isolant. Cela a l'avantage de diminuer le coût du module de communication puisque l'étape de préparation d'un semi-fini constitué du transpondeur enrobé de mélange caoutchouteux non vulcanisé isolant est supprimée.

Il est particulièrement avantageux lorsque l'on utilise un transpondeur radiofréquence nu, c'est-à-dire sans être enrobé par un mélange caoutchouteux, de le placer à l'intérieur d'un profilé caoutchouteux et non à l'interface entre deux mélanges caoutchouteux adjacents. Cela renforce la résistance mécanique de l'ensemble de la structure.

Le mélange du profilé caoutchouteux dans lequel la fente est réalisée est de préférence isolant électriquement.

Le mélange du profilé caoutchouteux comportant une fente peut aussi ne pas être isolant électriquement. Il est bien connu que l'absence d'une couche de mélange caoutchouteux isolante électriquement diminue l'efficacité de l'antenne rayonnante du transpondeur radiofréquence, mais l'utilisation d'un transpondeur radiofréquence tel que décrit dans le document WO 2016/193457 A1 permet en raison de sa meilleure résistance mécanique et de son excellent potentiel de communication avec un lecteur extérieur de le mettre en place dans des positions où cette communication est facilitée tout en conservant une excellente durée de vie en service et de bonnes capacités de communication avec un lecteur extérieur.

Selon un deuxième mode de réalisation du procédé selon l'un des objets de l'invention, le module de communication est constitué du transpondeur radiofréquence enrobé dans une masse de gomme d'enrobage isolante électriquement. Ce mode de réalisation améliore l'efficacité de l'antenne rayonnante du transpondeur radiofréquence.

Avantageusement, le transpondeur radiofréquence est gainé de gomme d'enrobage isolante électriquement et le module de communication, prêt à être placé dans le pneumatique, a une géométrie avec un axe de symétrie de rotation.

Il est avantageux d'utiliser un module de communication ou semi-fini de forme cylindrique pour insérer dans la fente le module de communication en raison de la plus grande facilité de manipulation et de mise en place : le seul impératif est de bien orienter l'axe de symétrie du semi-fini.

Avantageusement, le module de communication est inséré dans la fente du profilé de telle sorte que l'axe défini par l'antenne rayonnante est orienté circonférentiellement.

Cette orientation est perpendiculaire aux fils de l'armature de carcasse d'un pneumatique radial et est très favorable pour la tenue mécanique du transpondeur ainsi que pour la qualité de communication du transpondeur avec un lecteur extérieur.

Selon un mode de réalisation avantageux, le pneumatique comprend une armature de carcasse radiale, constituée d'au moins une couche d'armature de carcasse formée d'éléments de renforcements insérés entre deux couches de calandrage en mélange caoutchouteux, une armature de sommet, elle-même coiffée radialement d'une bande de roulement. La bande de roulement est réunie à deux bourrelets par l'intermédiaire de deux flancs. La couche d'éléments de renforcements de l'armature de carcasse est ancrée dans chacun des bourrelets par retournement autour d'une tringle pour former une partie principale de la couche d'armature de carcasse dans chacun des bourrelets. Le retournement de la couche d'armature de carcasse est séparé de la partie principale de la couche d'armature de carcasse par une première couche de mélange caoutchouteux s'étendant radialement extérieurement depuis la tringle. Une deuxième couche de mélange caoutchouteux forme la surface extérieure du pneumatique dans la zone du bourrelet. La deuxième couche de mélange caoutchouteux étant destinée notamment à venir en contact de la jante, est radialement vers l'extérieur en contact d'une troisième couche de mélange caoutchouteux formant la surface extérieure du flanc.

C'est une architecture classique d'un pneumatique pouvant accueillir un module de communication au sein de sa structure, en particulier dans l'un de ses bourrelets ou de ses flancs.

Selon un mode de réalisation particulier, la fente est créée à partir de la surface du profilé de la deuxième ou de la troisième couche de mélange caoutchouteux, radialement extérieurement relativement à la tringle.

Les deuxième et troisième couches de mélange caoutchouteux sont situées axialement extérieurement par rapport la nappe carcasse. Le module de communication est noyée dans un mélange homogène et proche de la surface extérieure du pneumatique ce qui est favorable à la communication radiofréquence. Bien entendu, il convient d'éloigner le module de communication de la tringle qui, étant métallique et proche de la jante souvent elle aussi métallique, perturbe les ondes radioélectriques.

Selon un mode de réalisation spécifique, la fente est créée sur une surface du profilé qui ne soit pas une surface externe du pneumatique.

Ainsi, on assure qu'un profilé et/ou élément de renforcement viendra constituer une interface avec la surface du profilé comprenant la fente au niveau de l'ébauche complète du pneumatique afin d'empêcher toute extraction du module de communication du profilé. Cela permet de sécuriser le positionnement du module de communication au cours du procédé de fabrication du pneumatique.

Selon un mode de réalisation très avantageux, une quatrième couche de mélange caoutchouteux est disposée axialement entre le retournement de la couche d'armature de carcasse et les deuxième et troisième couches de mélange caoutchouteux.

La quatrième couche de mélange caoutchouteux est un profilé interne du pneumatique, c'est à-dire que les surfaces de la couche sont situées à l'intérieur du pneumatique.

Selon un mode de réalisation très particulier, la fente est créée à partir de la surface du profilé de la quatrième couche de mélange caoutchouteux.

Ainsi, le module de communication est enfoui dans la structure du pneumatique ce qui lui assure une protection mécanique contre les agressions extérieures au pneumatique. La quatrième couche de mélange caoutchouteux est une couche interne au pneumatique, la fente peut donc être réalisée indépendamment sur l'une ou l'autre des surfaces de la quatrième couche de mélange caoutchouteux ce qui autorise de complexer cette couche avec d'autres couches par l'intermédiaire de la surface n'accueillant pas la fente.

Selon un mode de réalisation spécifique, la première couche de mélange caoutchouteux s'étendant radialement jusqu'au-delà l'extrémité du retournement de la couche d'armature de carcasse, la fente est créée à partir de la surface du profilé de la première couche de mélange caoutchouteux et le module de communication est placé radialement extérieurement relativement à l'extrémité du retournement de la couche d'armature de carcasse.

Ainsi, le positionnement de la première couche de mélange caoutchouteux sur l'ébauche du pneumatique étant fait par rapport à la tringle, on peut positionner le module de communication dans la première couche de mélange caoutchouteux avant de positionner cette couche sur l'ébauche du pneumatique ce qui permet d'améliorer le temps de cycle de réalisation de l'ébauche d'un tel pneumatique ou de positionner de façon robuste le module de communication par rapport à l'extrémité du retournement de la couche d'armature de carcasse qui constitue une singularité de rigidité dans le pneumatique. De plus, la première couche de mélange caoutchouteux est par nature un profilé interne du pneumatique.

### Description des Figures

Les différents objets de l'invention seront mieux compris au moyen de la description détaillée qui suit, conjointement avec les figures annexés sur lesquelles les mêmes numéros de référence désignent partout des parties identiques, et dans lesquelles :
- la figure 1 illustre une vue méridienne d'un schéma d'un pneumatique ;
- la figure 2 présente une représentation schématique de la zone du bourrelet d'un pneumatique selon un premier mode de réalisation de l'invention ;
- la figure 3 présente une représentation schématique de la zone du bourrelet d'un pneumatique selon un deuxième mode de réalisation de l'invention ;
- la figure 4 présente une représentation schématique de la zone du bourrelet d'un pneumatique selon un troisième mode de réalisation de l'invention ;
- la figure 5 présente une représentation schématique de la zone du bourrelet d'un pneumatique selon un quatrième mode de réalisation de l'invention ;
- la figure 6 présente une vue éclatée schématique d'un module de communication ;
- la figure 7 présente une vue schématique d'un module de communication de forme cylindrique ;
- la figure 8 présente une vue en perspective de la partie électronique d'un transpondeur radiofréquence ; et
- la figure 9 présente un profilé de mélanges caoutchouteux destiné à être appliqué sur une ébauche de pneumatique.

Les figures ne sont pas représentées à l'échelle pour en simplifier la compréhension.

### Description détaillée de l'invention

Dans ce qui suit, les termes « gomme caoutchouteuse », « mélange caoutchouteux », « gomme » et « mélange » sont utilisés de façon équivalente pour identifier des constituants caoutchouteux du pneumatique.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

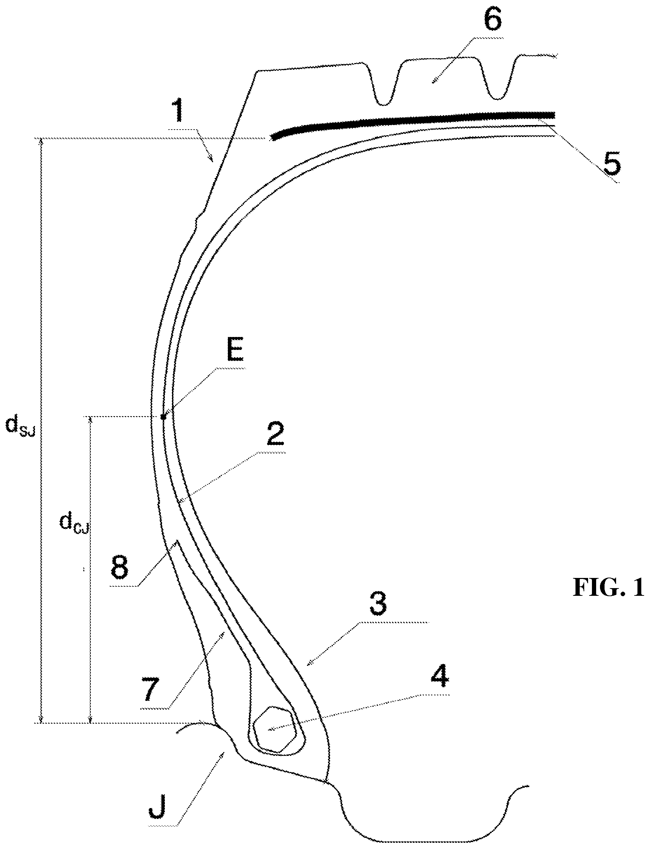

La figure 1 représente une demi-vie d'un pneumatique qui se prolonge de manière symétrique par rapport au plan médian circonférentiel, ou plan équatorial, d'un pneumatique.

Sur la figure 1, le pneumatique 1 est de dimension 12 R 22.5. Le pneumatique 1 comprend une armature de carcasse radiale 2 ancrée dans deux bourrelets 3. L'armature de carcasse 2 est frettée au sommet du pneumatique par une armature de sommet 5, elle-même coiffée d'une bande de roulement 6.

L'armature de carcasse 2, formée d'une seule couche de câbles métalliques, est enroulée dans chacun des bourrelets 3 autour d'une tringle 4 et forme dans chacun des bourrelets 3 un retournement de la couche d'armature de carcasse 7 présentant une extrémité 8.

L'armature de carcasse 2 est constituée d'éléments de renforcements entre deux couches de calandrage.

La figure 1 illustre le pneumatique monté sur sa jante nominale J ; le point E axialement le plus extérieur de la partie principale de la couche d'armature de carcasse 2 est ainsi déterminé le pneumatique étant gonflé à sa pression nominale, par exemple par tomographie.

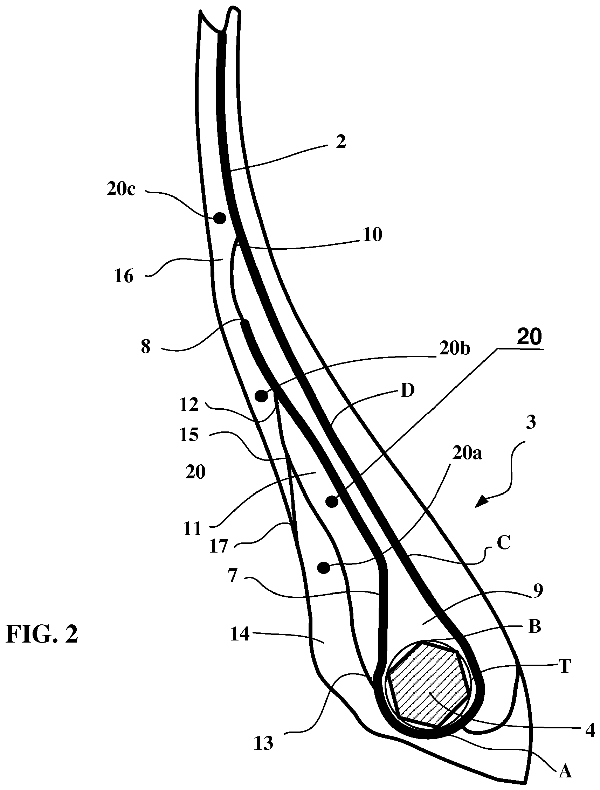

La figure 2 illustre de manière agrandie une représentation schématique en coupe d'un bourrelet 3 du pneumatique de la figure 1 dans lequel on retrouve une partie de la couche d'armature de carcasse 2 enroulée autour d'une tringle 4 pour former un retournement 7 avec une extrémité 8.

Le retournement 7 de la couche d'armature de carcasse 2 est séparé de la partie principale de la couche d'armature de carcasse 2 par une première couche de mélange caoutchouteux 9, présentant une extrémité radialement extérieure 10.

La première couche de mélange caoutchouteux 9 est profilée pour venir en appui sur la tringle 4 et assurer un couplage et un découplage entre le retournement de la couche d'armature de carcasse 7 et la partie principale de la couche d'armature de carcasse 2.

Axialement à l'extérieur du retournement 7 de la couche d'armature de carcasse est représentée une quatrième couche de mélange caoutchouteux 11 dont l'extrémité radialement extérieure 12 est radialement à l'intérieur de l'extrémité 8 du retournement 7 de la couche d'armature de carcasse. Selon un autre mode de réalisation non représenté, l'extrémité radialement extérieure de la quatrième couche de mélange caoutchouteux est radialement extérieure à l'extrémité 8 du retournement 7 de la couche d'armature de carcasse.

L'extrémité radialement intérieure 13 de la quatrième couche de mélange caoutchouteux 11 est radialement comprise entre les points A et B, respectivement radialement le plus intérieur et radialement le plus extérieur du cercle circonscrit à la tringle T.

Au contact de la quatrième couche de mélange caoutchouteux 11 et radialement sous la tringle, on trouve une deuxième couche de mélange caoutchouteux 14, dont l'extrémité axialement la plus extérieure 15 est radialement à l'intérieur de l'extrémité 12 de la quatrième couche de mélange caoutchouteux 11.

Axialement au contact de la première couche de mélange caoutchouteux 9, de la quatrième couche de mélange caoutchouteux 11, et de la deuxième couche de mélange caoutchouteux 14, se trouve une troisième couche de mélange caoutchouteux 16. L'extrémité 17 radialement intérieure de la troisième couche de mélange caoutchouteux 16 est radialement intérieure à l'extrémité 15 de la deuxième couche de mélange caoutchouteux 14.

Le bourrelet 3 comporte aussi un module de communication radiofréquence 20 disposé axialement extérieurement relativement à l'interface entre le retournement de l'armature de carcasse 7 et la quatrième couche de mélange caoutchouteux 11. Ce module de communication 20 est placé radialement au niveau de la zone de couplage entre la partie principale 2 de l'armature de carcasse et le retournement 7 de cette armature de carcasse, c'est-à-dire entre les deux points C et D de la figure 2. Le module de communication 20 est de préférence disposé sensiblement au milieu de cette zone de couplage, entre C et D. Le module de communication 20 est noyé à l'intérieur de la quatrième couche de mélange caoutchouteux 11 à une distance supérieure à 2 mm et de préférence supérieure à 3 mm de l'interface.

Cette position protège bien mécaniquement le transpondeur radiofréquence du module de communication et la demanderesse a constaté expérimentalement que la distance supérieure à 2 mm des fils métalliques du retournement 7 de l'armature de carcasse 2 permet une bonne robustesse de communication avec un lecteur extérieur même si les distances de lecture sont pratiquement identiques ou très proches par rapport à un module de communication disposé à l'interface entre le retournement 7 et la quatrième couche de mélange caoutchouteux. La distance de lecture est ainsi moins soumise aux aléas de la fabrication industrielle que lorsque le module de communication est placé directement à l'interface entre la deuxième couche de communication et le calandrage de la couche de renforts métalliques du retournement 7.

La figure 2 présente aussi des modules de communication 20a, 20b et 20c placés dans des positions alternatives. Le module de communication 20a est noyé à l'intérieur de la deuxième couche de mélange caoutchouteux radialement extérieurement relativement au point B ; les modules de communication 20b et 20c sont tous les deux noyés dans la troisième couche de mélange caoutchouteux, celle constituant la surface du flanc du pneumatique. Ces deux dernières positions sont très favorables du point de vue de la communication entre le module de communication et un lecteur extérieur et la très bonne résistance mécanique du module de communication lui permet de résister aux sollicitations mécaniques en service particulièrement sévères à proximité du point E du flanc notamment.

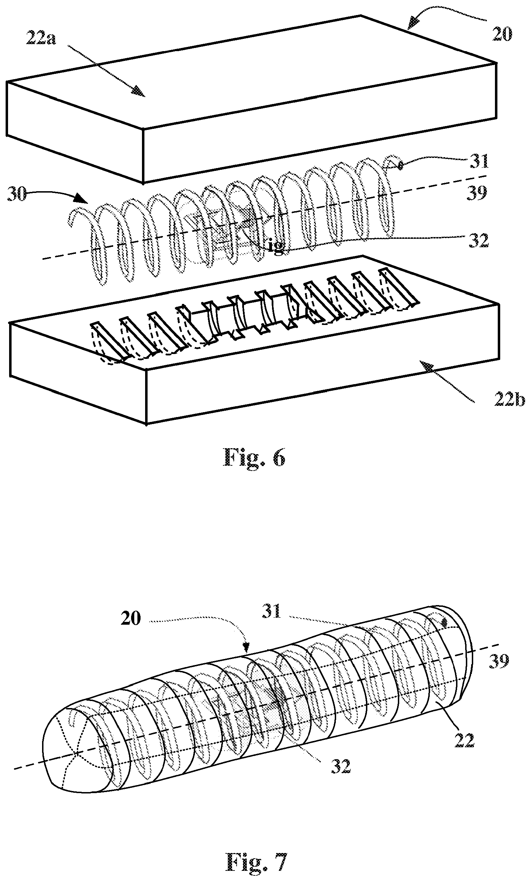

La figure 6 présente un éclaté d'un module de communication 20. Ce module 20 comprend un transpondeur radiofréquence 30 noyé entre deux couches 22a et 22b d'un mélange caoutchouteux isolant électriquement non-vulcanisé. L'épaisseur de chaque couche est de l'ordre de 1 à 2 mm, la longueur de l'ordre de 50 à 70 mm et sa largeur de l'ordre de 10 à 20 mm. Un tel module de communication est un produit semi-fini apte à être intégré dans la structure du pneumatique 1 lors de la fabrication de celui-ci.

Le mélange caoutchouteux 22 d'enrobage du transpondeur radiofréquence 30, contient 100 pce (parties pour 100 parties d'élastomère en masse) de polymère tel qu'EPDM (ethylene propylene diene monomer rubber), caoutchouc butyle, néoprène ou d'élastomère diénique tel que SBR (styrene-butadiene rubber), polybutadiène, caoutchouc naturel, ou polyisoprène.

Le mélange peut contenir des charges de type silice, noir de carbone, craie, kaolin :
- avec une charge de type silice à un taux maximum de 50 pce,
- avec une charge de type noir de carbone de grade ASTM supérieur à 700, à un taux inférieur à 50 pce ;
- avec une charge de type noir de carbone de grade inférieur ou égal à 500, à un taux maximum de 20 pce.
- il est possible d'ajouter ou de remplacer ces charges par de la craie ou du kaolin.

De tels taux et types de charges permettent de garantir une permittivité relative inférieure à 6.5, notamment à une fréquence de 915 MHz.

La rigidité à cuit du mélange d'enrobage est de préférence inférieure ou proche de celles des mélanges caoutchouteux adjacents.

La figure 7 présente un mode de réalisation alternatif du module de communication 20. Dans ce mode de réalisation, le transpondeur radiofréquence 30 est noyé dans un mélange de gomme 22 isolant électriquement et l'ensemble présente une forme sensiblement cylindrique. Le diamètre extérieur de l'antenne rayonnante 31 est de l'ordre de 2 mm et avantageusement l'épaisseur de la couche de gomme isolante électriquement entre la surface extérieure de l'antenne rayonnante 31 et la surface extérieure du module de communication est de l'ordre de 1 mm. Le semi-fini ou module de communication 20 prêt à être inséré dans les fentes des profilés de mélange caoutchouteux appropriés a donc un diamètre de l'ordre de 4 mm avec une longueur de l'ordre de 50 mm.

Le transpondeur radiofréquence 30 du module de communication 20 tel que présenté aux figures 6 et 7correspond à celui décrit dans le document WO 2016/193457 A1 qui va être décrit maintenant.

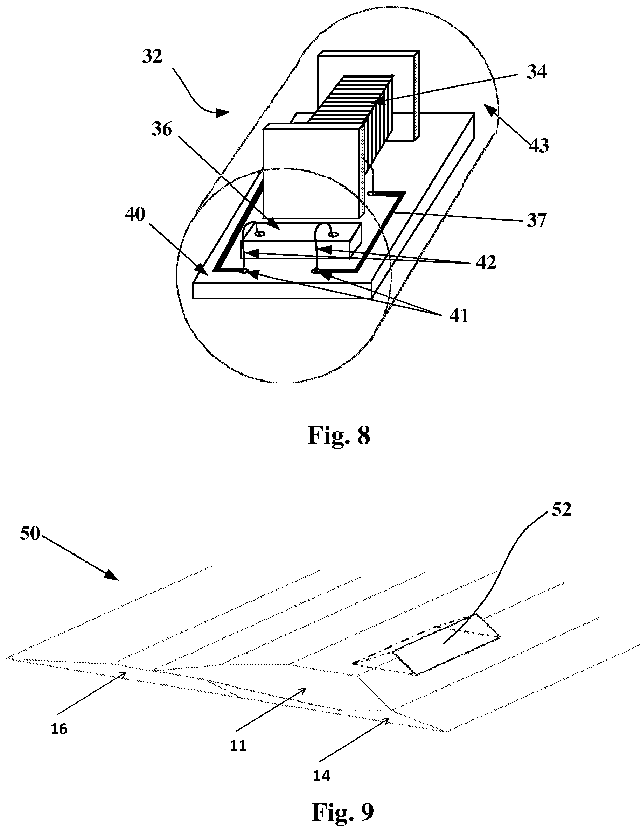

Le transpondeur radiofréquence 30 selon ce mode de réalisation du module de communication 20 comprend une partie électronique 32 et une antenne rayonnante 31 apte à communiquer avec un lecteur radiofréquence externe. Il comprend en plus (voir figure 8) une antenne primaire 34 connectée électriquement à la puce électronique 36 et couplée inductivement à l'antenne rayonnante 31. L'antenne rayonnante est une antenne dipôle constituée d'un ressort hélicoïdal monobrin définissant un premier axe longitudinal 39.

Les figures 6 et 7 présentent un transpondeur radiofréquence 30 dans une configuration préférentielle où la partie électronique 32 est située à l'intérieur de l'antenne rayonnante 31. La forme géométrique de la partie électronique 32 est circonscrite dans un cylindre dont le diamètre est inférieur ou égal au diamètre intérieur du ressort hélicoïdal. L'enfilement de la partie électronique 32 dans l'antenne rayonnante 31 s'en trouve facilité. Le plan médian de l'antenne primaire se trouve dans la zone centrale de l'antenne rayonnante et sensiblement superposé au plan médian de l'antenne rayonnante.

Il est aussi possible de disposer la partie électronique à l'extérieur de l'antenne rayonnante 31.

La figure 8 présente la partie électronique 32 d'un transpondeur radiofréquence 30 destiné à une configuration où la partie électronique 32 est située à l'intérieur de l'antenne rayonnante 31. La partie électronique 32 comprend une puce électronique 36 et une antenne primaire 34 connectée électriquement à la puce électronique 36 par l'intermédiaire d'un circuit imprimé 40. L'antenne primaire est ici constituée par une micro bobine CMS (acronyme de Composant Monté en Surface). La connexion électrique entre les composants sur le circuit imprimé est réalisée à l'aide de pistes en cuivre 37 terminées par des pastilles 41 en cuivre. La connexion électrique des composants sur le circuit imprimé est réalisée à l'aide de la technique dite du « wire bonding » par des fils 42 en or entre le composant et les pastilles 41. L'ensemble constitué du circuit imprimé 40, de la puce électronique 36 et de l'antenne primaire 34 est noyé dans une masse rigide 43 en résine époxy haute température isolante électriquement constituant la partie électronique 32 du transpondeur radiofréquence 30.

Ce transpondeur radiofréquence 30 a l'avantage d'être beaucoup plus résistant mécaniquement que les transpondeurs usuels.

Des procédés de mise en place d'un module de communication 20 noyé à l'intérieur de la quatrième couche de mélange caoutchouteux sont maintenant décrits. Les procédés correspondant aux trois autres positions présentées à la figure 2 sont tout à fait similaires.

Selon un premier procédé d'assemblage d'une ébauche de pneumatique comportant un module de communication radiofréquence 20 :
- on fabrique une ébauche cylindrique comprenant une tringle annulaire intercalée entre une armature de carcasse annulaire et une première couche de mélange caoutchouteux,
- on replie, autour de la tringle une partie de l'armature de carcasse sur la première couche de mélange caoutchouteux pour former un retournement de l'armature de carcasse ; et
- on vient déposer sur le retournement un deuxième profilé constitué d'au moins une quatrième couche de mélange caoutchouteux qui comporte noyé à l'intérieur un module de communication.

Avantageusement, avant de déposer le deuxième profilé sur le retournement de l'armature de carcasse, on crée une fente à partir de la surface de la quatrième couche de mélange caoutchouteux et on introduit le module de communication ou le transpondeur radiofréquence selon le cas, à l'intérieur de la fente.

Comme l'illustre la figure 9, on peut utiliser lors de la confection d'un pneumatique un profilé complexe 50, il est alors très aisé, avant la mise en place de ce complexe de réaliser au moyen par exemple d'un dispositif de coupe à ultra-sons une fente de dimensions et d'orientation adaptées pour la mise en place rapide et reproductible du transpondeur radiofréquence et de ses gommes d'enrobage s'il y a lieu.

Ce profilé 50 comporte sur la surface libre du quatrième mélange caoutchouteux 11, destinée à venir en appui sur le retournement de l'armature de carcasse, une fente 52 de dimensions appropriées pour accueillir un module de communication tel que présenté aux figures 6 et 7. La fente 52 est aussi réalisée de telle sorte que l'axe de symétrie 39 défini par l'antenne rayonnante du transpondeur radiofréquence passif du module de communication soit orienté circonférentiellement. Cette fente 52 est réalisée à l'aide d'un dispositif de coupe à ultrasons ou lame vibrante dessinant une incision par exemple en forme de U sur le surface extérieure du profilé complexe 50 constitué de deux bras et d'une base. L'orientation du dispositif de coupe évolue suivant l'altitude des bras du U afin de décrire un rayon autour d'un axe fixe du profilé. Ainsi, on crée une fente 52 ou incision en forme de V que l'on aperçoit en trait pointillé. Cette fente 52 s'ouvre par pivotement de la matière autour d'un axe liant les deux extrémités libres du U permettant d'insérer le module de communication au sein de la fente 52 et de refermer la fente 52 sur le module de communication lorsque celui-ci est positionné dans la fente. Un roulettage du profilé 50 au niveau de la fente 52 est alors réalisée pour créer de nouveau une liaison au niveau de des parties disjointes du profilé délimitées par la fente 52 lorsque le module de communication a été introduit dans le profilé 50.

Préférentiellement, cette fente 52 est orientée circonférentiellement lorsque le profilé 50 monté sur l'ébauche du pneumatique est conformé. La fente 52 présente une grande dimension selon la future direction circonférentielle qui est parallèle au premier axe longitudinal de l'antenne rayonnante du transpondeur radiofréquence. La profondeur de la fente 52 suivant l'épaisseur du profilé 50 permet l'introduction du transpondeur radiofréquence à une profondeur d'au moins 2 millimètres de la surface extérieure du profilé 50 qui comprend la fente 52. La fente 52 sera recouverte par le retournement de la couche d'armature de carcasse dans le cas de l'architecture du pneumatique de la figure 2. Ce qui empêchera tout déplacement du module de communication au sein du profilé 50 lors de la manipulation de l'ébauche du pneumatique jusqu'à la réalisation finale du pneumatique à l'état cuit.

Selon un autre procédé d'assemblage du pneumatique :
- on dépose sur un tambour cylindrique une gomme intérieure ;
- on dépose successivement ou en un complexe les profilés des deuxième, troisième et quatrième couches de mélange caoutchouteux ;
- on met en place les deux tringles et les deux profilés de la première couche de mélange caoutchouteux ;
- on conforme la carcasse pour la plaquer sur la surface intérieure des deux tringles et profilés de la première couche ;
- on replie autour de la tringle et on rabat sur la première couche de mélange caoutchouteux les deuxième, troisième et quatrième couches de mélanges caoutchouteux ; et
- on achève la fabrication de l'ébauche de pneumatique puis on vulcanise cette ébauche pour donner un pneumatique.

Ce procédé est tel que, avant de replier autour de la tringle les deuxième, troisième et quatrième couches de mélanges caoutchouteux, on crée une fente à partir de la surface du profilé de la quatrième couche de mélange caoutchouteux et on introduit le module de communication à l'intérieur de la fente.

Dans les deux procédés d'assemblage précédents d'une ébauche de pneumatique, la fente à la surface de la quatrième couche de mélange caoutchouteux peut être réalisée avant la mise en place du profilé sur l'ébauche de pneumatique ou pendant cet assemblage de l'ébauche de pneumatique.

Il est avantageux d'utiliser un semi-fini à symétrie cylindrique pour insérer dans la fente le module de communication en raison de la plus grande facilité de manipulation et de mise en place : le seul impératif est de bien orienter l'axe de symétrie du semi-fini.

Un tel semi-fini avec un axe de symétrie de rotation est présenté à la figure 7.

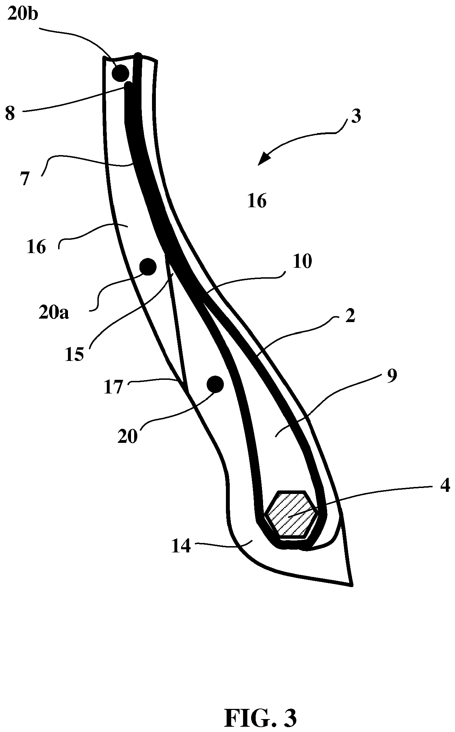

La figure 3 présente un bourrelet 3 de pneumatique pour principalement des véhicules de tourisme. L'armature de carcasse 2 est ancrée dans le bourrelet 3 par un retournement autour de la tringle 4. Les fils de renfort de l'armature de carcasse sont des fils textiles, La première couche de mélange 9 sépare la partie principale de l'armature de carcasse 2 du retournement 7. Le retournement 7 de l'armature de carcasse 2 remonte dans la zone du flanc au-delà de l'extrémité radialement extérieure de la première couche de mélange 9. La deuxième couche de mélange 14, couche en contact avec la jante lorsque le pneumatique est monté sur celle-ci, et la troisième couche de mélange 16 assurant la surface extérieure du pneumatique dans la zone de flanc sont directement en contact avec le retournement 7. Il n'y a pas de quatrième couche de mélange caoutchouteux. Ce bourrelet comprend un module de communication 20 noyé dans la deuxième couche de mélange caoutchouteux à une position radialement extérieure relativement à la tringle 4 pour être radialement extérieure au crochet de la jante J après montage du pneumatique pour assurer une bonne communication entre le module de communication et un lecteur extérieur. Cette figure présente aussi deux positions alternatives 20a et 20b dans lesquelles le module de communication est noyé dans la troisième couche de mélange caoutchouteux. Comme précédemment ces deux dernières positions sont rendues possibles en raison de la bonne résistance mécanique du module de communication utilisé.

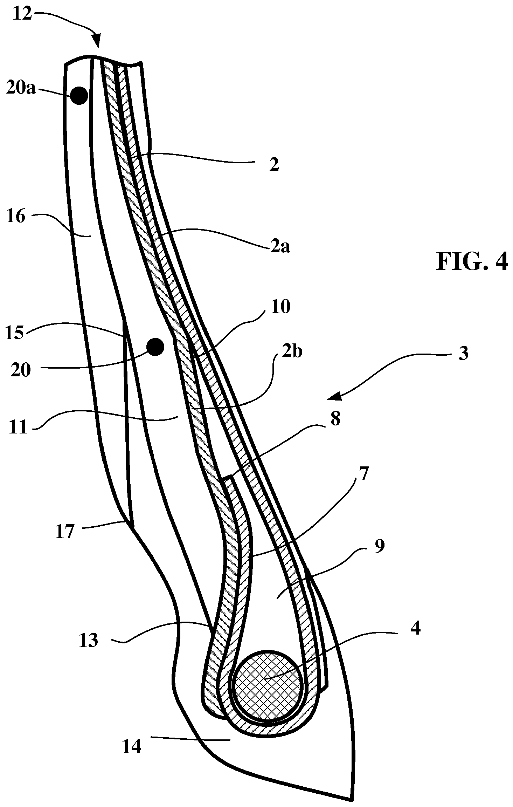

La figure 4 présente un bourrelet 3 de pneumatique pour principalement des véhicules de type camionnette. L'armature de carcasse 2 du bourrelet de ce pneumatique est constituée de deux nappes carcasses, 2a et 2b. La nappe 2a est ancrée autour de la tringle 4 par un retournement 7 et la nappe 2b est disposée extérieurement relativement à la nappe 2a. Les deux nappes 2a et 2b sont adjacentes jusqu'au bourrelet où la nappe 2b vient en contact axialement extérieurement avec le retournement 7. La première couche de mélange caoutchouteux 9 est ainsi disposée entre la partie principale de la nappe 2a et le retournement 7 de celle-ci suivi radialement extérieurement par la deuxième nappe 2b. Ce bourrelet comporte une quatrième couche de mélange caoutchouteux 11 disposée axialement entre la deuxième nappe 2b et les deuxième 14 et troisième 16 couches de mélanges caoutchouteux. Ce bourrelet comporte un module de communication 20 préférentiellement noyé dans la quatrième couche de mélange caoutchouteux 11 et très préférentiellement radialement au niveau de l'extrémité radialement extérieure 10 de la première couche de mélange caoutchouteux 9. Cette figure présente une position alternative pour le module de communication 20a. Position noyée dans la troisième couche de mélange caoutchouteux 16 à proximité du point E (voir figure 1).

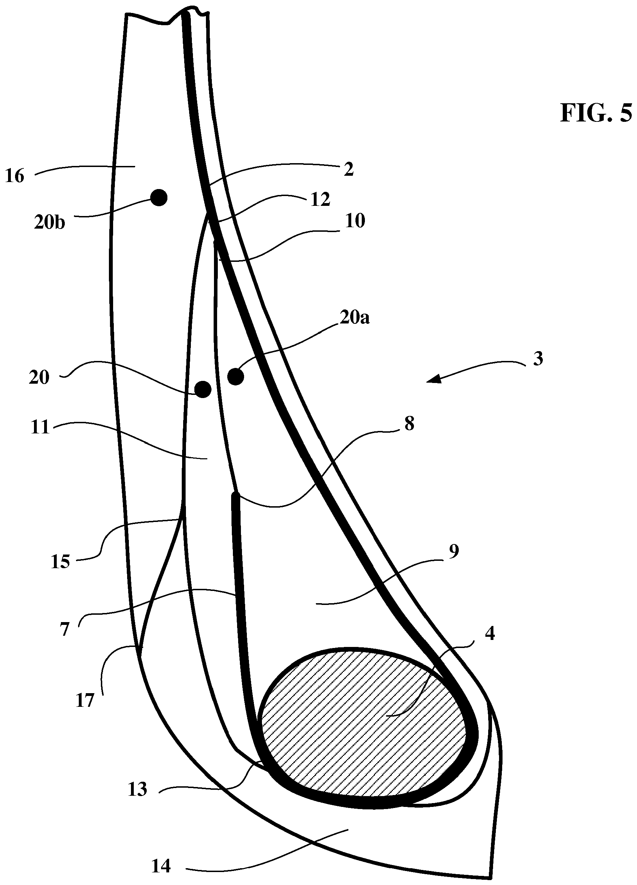

La figure 5 présente un bourrelet 3 de pneumatique usuellement utilisé pour des véhicules poids-lourds dans lequel l'armature de carcasse 2 comporte des fils de renfort métalliques et dans lequel l'extrémité 8 du retournement 7 est disposée radialement intérieurement relativement à l'extrémité radialement extérieure de la première couche de mélange caoutchouteux 9. Ce bourrelet 3 comprend comme dans les exemples des figures 2 et 4 une quatrième couche de mélange caoutchouteux 11 disposée axialement entre la première couche de mélange caoutchouteux 9 et les deuxième 14 et troisième 16 couches de mélange caoutchouteux. Cette figure 5 présente la position préférentielle du module de communication 20 : noyée à l'intérieur de la quatrième couche de mélange caoutchouteux 11 radialement extérieurement relativement à l'extrémité 8 du retournement 7 de l'armature de carcasse, ou de tout renfort métallique éventuellement présent dans le bourrelet 3 pour garantir une bonne communication électromagnétique.

Il est à noter la position alternative 20a du module de communication dans laquelle celui-ci est noyé à l'intérieur de la première couche de mélange caoutchouteux 9. Cette position est très bien protégée mécaniquement mais aussi suffisamment éloignée de l'armature de carcasse (de préférence le module de communication doit être à une distance des renforts métalliques supérieure à 2 mm et très préférentiellement 3 mm) pour garantir une communication du module de communication avec un lecteur extérieur robuste industriellement. C'est en fonction du procédé concret d'assemblage de l'ébauche de pneumatique que l'on pourra choisir la meilleure position illustrée en 20 ou 20a pour perturber le moins possible cet assemblage.

Cette figure 5 présente aussi une deuxième position alternative du module de communication 20b noyée dans la troisième couche 16. Comme précédemment indiqué, cette position du module de communication est rendue possible en raison de la bonne résistance aux sollicitations du module de communication utilisé.

Dans tous les exemples présentés, il est bien entendu que chaque couche de mélange caoutchouteux peut comporter une ou plusieurs couches de mélanges, de mélanges identiques ou différents, voire même comporter des renforts métalliques ou textiles si nécessaire.

De même, les exemples présentés ne sont pas limitatifs et que le procédé objet de l'invention peut s'appliquer à tout autre type ou domaine d'application tels que les pneumatiques agricoles, génie civil, avion, deux roues notamment.

Le procédé d'insertion d'un module de communication dans une fente réalisée dans un profilé avant ou pendant l'assemblage des constituants du pneumatique permet ainsi de disposer le module de communication dans un grand nombre de positions sans perturber l'assemblage de l'ébauche du pneumatique. Ce procédé est particulièrement avantageux lorsque l'on utilise un module de communication de forme cylindrique avec ou sans mélange isolant électriquement.

## Revendications

1. Procédé de fabrication d'un pneumatique (1) équipé d'un module de communication (20, 20a, 20b, 20c), consistant à successivement et dans l'ordre requis par l'architecture dudit pneumatique (1) poser des produits caoutchouteux notamment des profilés (50, 9, 11, 14, 16) et des éléments de renforcement sur un support donné pour donner une ébauche de pneumatique, puis à vulcaniser l'ébauche de pneumatique pour donner un pneumatique (1), le module de communication (20, 20a, 20b, 20c) comportant un transpondeur radiofréquence (30) comprenant une antenne primaire (34) connectée électriquement à une puce électronique (36) et couplée inductivement à une antenne rayonnante (31) dipôle constituée d'un ressort hélicoïdal monobrin, **caractérisé en ce que**, avant de poser l'un des profilés (50, 9, 11,14, 16) caoutchouteux sur l'ébauche de pneumatique, on crée une fente (52) à partir d'une surface dudit profilé (50, 9, 11, 14, 16) caoutchouteux et on introduit le module de communication (20, 20a, 20b, 20c) à l'intérieur de la fente (52).

2. Procédé de fabrication d'un pneumatique (1) selon la revendication 1, dans lequel la fente (52) à la surface du profilé (50, 9, 11, 14, 16) caoutchouteux est réalisée indépendamment des opérations d'assemblage de l'ébauche du pneumatique.

3. Procédé de fabrication d'un pneumatique (1) selon la revendication 1, dans lequel la fente (52) à la surface du profilé (50, 9, 11, 14, 16) caoutchouteux est réalisée pendant l'assemblage de l'ébauche dudit pneumatique.

4. Procédé de fabrication d'un pneumatique (1) selon l'une des revendications 1 à 3, dans lequel le module de communication (20, 20a, 20b, 20c) est constitué du transpondeur radiofréquence (30).

5. Procédé de fabrication d'un pneumatique (1) selon la revendication 4, dans lequel le mélange du profilé (50, 9, 11, 14, 16) caoutchouteux comportant une fente (52) est isolant électriquement.

6. Procédé de fabrication d'un pneumatique (1) selon la revendication 4, dans lequel le mélange du profilé (50, 9, 11, 14, 16) caoutchouteux comportant une fente (52) n'est pas isolant électriquement.

7. Procédé de fabrication d'un pneumatique (1) selon l'une des revendications 1 à 3, dans lequel le module de communication (20, 20a, 20b, 20c) est constitué du transpondeur radiofréquence (30) enrobé dans une masse de gomme d'enrobage (22, 22a, 22b) isolante électriquement.

8. Procédé de fabrication d'un pneumatique (1) selon la revendication 7, dans lequel le transpondeur radiofréquence (30) est gainé de gomme d'enrobage (22) isolante électriquement et le module de communication (20, 20a, 20b, 20c) a un axe de symétrie (39) de rotation.

9. Procédé de fabrication d'un pneumatique (1) selon l'une quelconque des revendications 1 à 8, dans lequel le pneumatique (1) comprend une armature de carcasse radiale, constituée d'au moins une couche d'armature de carcasse (2, 2a, 2b) formée d'éléments de renforcement insérés entre deux couches de calandrage de mélange caoutchouteux, une armature de sommet (5), elle-même coiffée radialement d'une bande de roulement (6), ladite bande de roulement (6) étant réunie à deux bourrelets (3) par l'intermédiaire de deux flancs, la couche d'éléments de renforcement de l'armature de carcasse étant ancrée dans chacun des bourrelets (3) par retournement autour d'une tringle (4), pour former une partie principale de la couche d'armature de carcasse (2) s'étendant d'une tringle (4) à l'autre et un retournement (7) de la couche d'armature de carcasse dans chacun des bourrelets (3), ledit retournement (7) de la couche d'armature de carcasse étant séparé de la partie principale de la couche d'armature de carcasse (2) par une première couche de mélange caoutchouteux (9) s'étendant radialement extérieurement depuis la tringle (4), une deuxième couche de mélange caoutchouteux (14) formant la surface extérieure du pneumatique (1) dans la zone du bourrelet (3), ladite deuxième couche de mélange caoutchouteux (14) étant destinée notamment à venir au contact de la jante, ladite deuxième couche de mélange caoutchouteux (14) étant radialement vers l'extérieur au contact d'une troisième couche de mélange caoutchouteux (16) formant la surface extérieure dudit flanc.

10. Procédé de fabrication d'un pneumatique (1) selon la revendication 9, dans lequel la fente (52) est créée à partir de la surface du profilé de la deuxième (14) ou de la troisième (16) couche de mélange caoutchouteux, radialement extérieurement relativement à la tringle (4).

11. Procédé de fabrication d'un pneumatique (1) selon la revendication 9, dans lequel, une quatrième couche de mélange caoutchouteux (11) est disposée axialement entre ledit retournement (7) de la couche d'armature de carcasse et les deuxième (14) et troisième (16) couches de mélanges caoutchouteux.

12. Procédé de fabrication d'un pneumatique (1) selon la revendication 11, dans lequel la fente (52) est créée à partir de la surface du profilé de la quatrième couche de mélange caoutchouteux (11).

13. Procédé de fabrication d'un pneumatique (1) selon la revendication 11, dans lequel, la première couche de mélange caoutchouteux (9) s'étendant radialement extérieurement jusqu'au-delà de l'extrémité (8) du retournement (7) de la couche d'armature de carcasse, la fente (52) est créée à partir de la surface du profilé de la première couche de mélange caoutchouteux (9) et le module de communication (20, 20a, 20b, 20c) est placé radialement extérieurement relativement à l'extrémité (8) dudit retournement (7) de la couche d'armature de carcasse.

## Patentansprüche

1. Verfahren zur Herstellung eines Reifens (1), der mit einem Kommunikationsmodul (20, 20a, 20b, 20c) ausgestattet ist, darin bestehend, nacheinander und in der durch die Architektur des Reifens (1) erforderlichen Reihenfolge Kautschukprodukte, insbesondere Profilteile (50, 9, 11, 14, 16) und Verstärkungselemente, auf einen gegebenen Träger aufzulegen, um einen Reifenrohling zu erhalten, und anschließend den Reifenrohling zu vulkanisieren, um einen Reifen (1) zu erhalten, wobei das Kommunikationsmodul (20, 20a, 20b, 20c) einen Hochfrequenz-Transponder (30) aufweist, der eine Primärantenne (34) umfasst, die mit einem Mikrochip (36) elektrisch verbunden ist und mit einer strahlenden Dipolantenne (31), die aus einer eingängigen Schraubenfeder besteht, induktiv gekoppelt ist, **dadurch gekennzeichnet, dass**, bevor eines der Kautschukprofilteile (50, 9, 11, 14, 16) auf den Reifenrohling aufgelegt wird, von einer Oberfläche des Kautschukprofilteils (50, 9, 11, 14, 16) aus ein Spalt (52) erzeugt wird und das Kommunikationsmodul (20, 20a, 20b, 20c) ins Innere des Spaltes (52) eingeführt wird.

2. Verfahren zur Herstellung eines Reifens (1) nach Anspruch 1, wobei der Spalt an der Oberfläche des Kautschukprofilteils (50, 9, 11, 14, 16) unabhängig von den Arbeitsgängen der Konfektionierung des Rohlings des Reifens hergestellt wird.

3. Verfahren zur Herstellung eines Reifens (1) nach Anspruch 1, wobei der Spalt an der Oberfläche des Kautschukprofilteils (50, 9, 11, 14, 16) während der Konfektionierung des Rohlings des Reifens hergestellt wird.

4. Verfahren zur Herstellung eines Reifens (1) nach einem der Ansprüche 1 bis 3, wobei das Kommunikationsmodul (20, 20a, 20b, 20c) aus dem Hochfrequenz-Transponder (30) besteht.

5. Verfahren zur Herstellung eines Reifens (1) nach Anspruch 4, wobei die Mischung des Kautschukprofilteils (50, 9, 11, 14, 16), das einen Spalt (52) aufweist, elektrisch isolierend ist.

6. Verfahren zur Herstellung eines Reifens (1) nach Anspruch 4, wobei die Mischung des Kautschukprofilteils (50, 9, 11, 14, 16), das einen Spalt (52) aufweist, nicht elektrisch isolierend ist.

7. Verfahren zur Herstellung eines Reifens (1) nach einem der Ansprüche 1 bis 3, wobei das Kommunikationsmodul (20, 20a, 20b, 20c) aus dem Hochfrequenz-Transponder (30) besteht, der in eine Masse aus elektrisch isolierendem Umhüllungsgummi (22, 22a, 22b) eingebettet ist.

8. Verfahren zur Herstellung eines Reifens (1) nach Anspruch 7, wobei der Hochfrequenz-Transponder (30) in elektrisch isolierenden Umhüllungsgummi (22) eingehüllt ist und das Kommunikationsmodul (20, 20a, 20b, 20c) eine Rotationssymmetrieachse (39) aufweist.

9. Verfahren zur Herstellung eines Reifens (1) nach einem der Ansprüche 1 bis 8, wobei der Reifen (1) eine radiale Karkassenbewehrung, die aus wenigstens einer Karkassenbewehrungsschicht (2, 2a, 2b) besteht, die von zwischen zwei Kalandrierschichten aus Kautschukmischung eingesetzten Verstärkungselementen gebildet wird, und eine Scheitelbewehrung (5), die ihrerseits radial von einem Laufstreifen (6) bedeckt wird, umfasst, wobei der Laufstreifen (6) über zwei Seitenwände mit zwei Wülsten (3) verbunden ist, wobei die Schicht von Verstärkungselementen der Karkassenbewehrung in jedem der Wülste (3) durch Umschlag um einen Wulstkern (4) verankert ist, um einen Hauptteil der Karkassenbewehrungsschicht (2), der sich von einem Wulstkern (4) zum anderen erstreckt, und einen Umschlag (7) der Karkassenbewehrungsschicht in jedem der Wülste (3) zu bilden, wobei der Umschlag (7) der Karkassenbewehrungsschicht vom Hauptteil der Karkassenbewehrungsschicht (2) durch eine erste Schicht Kautschukmischung (9) getrennt ist, die sich vom Wulstkern (4) aus radial nach außen erstreckt, wobei eine zweite Schicht Kautschukmischung (14) die Außenfläche des Reifens (1) im Bereich des Wulstes (3) bildet, wobei die zweite Schicht Kautschukmischung (14) insbesondere dazu bestimmt ist, mit der Felge in Kontakt zu kommen, wobei sich die zweite Schicht Kautschukmischung (14) radial außen in Kontakt mit einer dritten Schicht Kautschukmischung (16) befindet, welche die Außenfläche der Seitenwand bildet.

10. Verfahren zur Herstellung eines Reifens (1) nach Anspruch 9, wobei der Spalt (52) von der Oberfläche des Profilteils der zweiten (14) oder der dritten (16) Schicht Kautschukmischung aus erzeugt wird, radial außen bezüglich des Wulstkerns (4).

11. Verfahren zur Herstellung eines Reifens (1) nach Anspruch 9, wobei eine vierte Schicht Kautschukmischung (11) axial zwischen dem Umschlag (7) der Karkassenbewehrungsschicht und der zweiten (14) und dritten (16) Schicht Kautschukmischung angeordnet ist.

12. Verfahren zur Herstellung eines Reifens (1) nach Anspruch 11, wobei der Spalt (52) von der Oberfläche des Profilteils der vierten Schicht Kautschukmischung (11) aus erzeugt wird.

13. Verfahren zur Herstellung eines Reifens (1) nach Anspruch 11, wobei sich die erste Schicht Kautschukmischung (9) radial nach außen bis über das Ende (8) des Umschlags (7) der Karkassenbewehrungsschicht hinaus erstreckt, wobei der Spalt (52) von der Oberfläche des Profilteils der ersten Schicht Kautschukmischung (9) aus erzeugt wird und das Kommunikationsmodul (20, 20a, 20b, 20c) radial außen bezüglich des Endes (8) des Umschlags (7) der Karkassenbewehrungsschicht angeordnet ist.

## Claims

1. Method for manufacturing a tyre (1) equipped with a communication module (20, 20a, 20b, 20c), consisting in successively, and in the order required by the architecture of said tyre (1), laying rubber products, notably profiled elements (50, 9, 11, 14, 16) and reinforcing elements on a given support in order to yield a green tyre, then in vulcanizing the green tyre to yield a tyre (1), the communication module (20, 20a, 20b, 20c), comprising a radio-frequency transponder (30) comprising a primary antenna (34) electrically connected to an electronic chip (36) and inductively coupled to a dipole radiating antenna (31) consisting of a single-strand helical spring, **characterized in that,** prior to laying one of the rubber profiled elements (50, 9, 11, 14, 16) on the green tyre, a slot (52) is created starting from a surface of the rubber profiled element (50, 9, 11, 14, 16) and the communication module (20, 20a, 20b, 20c) is introduced into the slot (52).

2. Method for manufacturing a tyre (1) according to Claim 1, wherein the slot (52) at the surface of the rubber profiled element (50, 9, 11, 14, 16) is created independently of the operations of building the green tyre.

3. Method for manufacturing a tyre (1) according to Claim 1, wherein the slot (52) at the surface of the rubber profiled element (50, 9, 11, 14, 16) is created during the building of the green form of said tyre.

4. Method for manufacturing a tyre (1) according to one of Claims 1 to 3, wherein the communication module (20, 20a, 20b, 20c) consists of the radio-frequency transponder (30).

5. Method for manufacturing a tyre (1) according to Claim 4, wherein the compound of the rubber profiled element (50, 9, 11, 14, 16) comprising a slot (52) is electrically insulating.

6. Method for manufacturing a tyre (1) according to Claim 4, wherein the compound of the rubber profiled element (50, 9, 11, 14, 16) comprising a slot (52) is not electrically insulating.

7. Method for manufacturing a tyre (1) according to one of Claims 1 to 3, wherein the communication module (20, 20a, 20b, 20c) consists of a radio-frequency transponder (30) encapsulated in a mass (22, 22a, 22b) of electrically insulating encapsulating rubber.

8. Method for manufacturing a tyre (1) according to Claim 7, wherein the radio-frequency transponder (30) is sheathed with electrically insulating encapsulating rubber (22) and the communication module (20, 20a, 20b, 20c) has an axis (39) of rotational symmetry.

9. Method for manufacturing a tyre (1) according to one of Claims 1 to 8, wherein the tyre (1) comprises a radial carcass reinforcement made up of at least one carcass reinforcement layer (2, 2a, 2b) formed of reinforcing elements inserted between two skim layers of rubber compound, a crown reinforcement (5), itself radially capped by a tread (6), said tread (6) being connected to two beads (3) by two sidewalls, the layer of reinforcing elements of the carcass reinforcement being anchored in each of the beads (3) by being turned up around a bead wire (4) to form a main part of the carcass reinforcement layer (2), extending from one bead wire (4) to the other, and a turn-up (7) of the carcass reinforcement layer in each of the beads (3), said turn-up (7) of the carcass reinforcement layer being separated from the main part of the carcass reinforcement layer (2) by a first layer of rubber compound (9) extending radially externally from the bead wire (4), a second layer of rubber compound (14), that forms the exterior surface of the tyre (1) in the region of the bead (3), said second layer of rubber compound (14) notably being intended to come into contact with the rim, said second layer of rubber compound (14) being, radially towards the outside, in contact with a third layer of rubber compound (16) that forms the exterior surface of said sidewall.

10. Method for manufacturing a tyre (1) according to Claim 9, wherein the slot (52) is created starting from the surface of the profiled element of the second (14) or the third (16) layer of rubber compound, radially on the outside relative to the bead wire (4).

11. Method for manufacturing a tyre (1) according to Claim 9, wherein a fourth layer of rubber compound (11) is laid axially between the turn-up (7) of the carcass reinforcement layer and the second (14) and third (16) layers of rubber compound.

12. Method for manufacturing a tyre (1) according to Claim 11, wherein the slot (52) is created starting from the surface of the profiled element of the fourth layer of rubber compound (11).

13. Method for manufacturing a tyre (1) according to Claim 11, wherein , with the first layer of rubber compound (9) extending radially externally to beyond the end (8) of the turn-up (7) of the carcass reinforcement layer, the slot (52) is created starting from the surface of the profiled element of the first layer of rubber compound (9) and the communication module (20, 20a, 20b, 20c) is placed radially on the outside relative to the end (8) of the turn-up (7) of the carcass reinforcement layer.
